# EUROPÄISCHE PATENTSCHRIFT

(11) **EP 1 443 533 B1**
(45) Veröffentlichungstag und Bekanntmachung des Hinweises auf die Patenterteilung: **28.02.2007**
(21) Anmeldenummer: 04001931.7
(22) Anmeldetag: 29.01.2004
(51) Int. Cl.: H01H 3/00, H01R 3/08

(54) **Elektrische Schalter**
Electrical switches
Commutateurs électriques

(30) Priorität: 01.02.2003 DE 10304036; 03.09.2003 DE 10341017
(43) Veröffentlichungstag der Anmeldung: 04.08.2004
(73) Patentinhaber: Marquardt GmbH, 78604 Rietheim-Weilheim (DE)
(72) Erfinder: Berchtold, Rainer, 78532 Tuttlingen-Nendingen (DE); Bader, Michael, 78554 Aixheim (DE)
(74) Vertreter: Eisele, Otten, Roth & Dobler

(56) Entgegenhaltungen:
- DE-A1- 4 203 427
- DE-U1- 20 120 667
- US-A- 4 051 916

## Beschreibung

Die Erfindung betrifft einen elektrischen Schalter nach dem Oberbegriff des Patentanspruchs 1.

Elektrische Schalter werden im Kraftfahrzeug für verschiedene Funktionen verwendet. Beispielsweise wird ein in der Art eines Drehschalters betätigbarer elektrischer Schalter in einer Lichtbedieneinheit zum Schalten der Kraftfahrzeugbeleuchtung eingesetzt.

Ein solcher elektrischer Schalter ist beispielsweise aus der DE 43 28 030 A1 bekannt. Dieser Schalter besitzt ein Gehäuse sowie ein aus dem Gehäuse ragendes Betätigungsorgan. Im Gehäuse befindet sich das Kontaktsystem, das vom Bediener mittels des Betätigungsorgans schaltbar ist. Nachteilig bei diesem bekannten Schalter ist die Verletzungsgefahr am Betätigungsorgan, insbesondere beim Einsatz des Schalters in einem Kraftfahrzeug.

Weiter ist es aus der DE 199 64 133 A1 bekannt, einen Drehschalter für ein Kraftfahrzeug derart auszubilden, daß das Betätigungsorgan durch Einwirkung einer einen Schwellwert überschreitenden Kraft wenigstens teilweise im Gehäuse versenkbar ist. Dies wird dadurch erreicht, indem das Betätigungsorgan an Federn oder Halteteilen mit Sollbruchstellen gelagert ist. Aufgrund von Krafteinwirkung bei einem Unfall brechen die Federn oder die Halteteile wodurch das Betätigungsorgan im Gehäuse des Schalters eintaucht, so daß das Verletzungsrisiko für den Benutzer des Kraftfahrzeugs verkleinert ist. Hierbei ist es jedoch nachteilig, daß anschließend der Schalter zerstört ist und ausgetauscht werden muß. Dies gilt auch für den Fall, daß der Benutzer lediglich aus Versehen, beispielsweise beim Reinigen des Kraftfahrzeugs, am Betätigungsorgan anstößt.

Schließlich ist in der US 4 051 916 A ein in die Armaturentafel eines Kraftfahrzeugs eingebauter Schalter nach dem Oberbegriff des Anspruchs 1 beschrieben, bei dem ein Betätigungsorgan durch eine Öffnung aus der Armaturentafel herausragt. Der Schalter besitzt ein Gehäuse, das mittels eines Flansches sowie Federn in der Armaturentafel gehalten ist. Dadurch ist bei einer Krafteinwirkung in Richtung auf das Betätigungsorgan eine Bewegung des Gehäuses in der Armaturentafel gegen die Kraft der Federn ermöglicht, wobei zur Vermeidung einer Verletzungsgefahr das Betätigungsorgan in der Armaturentafel versenkt wird. Durch eine Zugkraft in Gegenrichtung kann das Gehäuse dann zurückbewegt werden, so daß das Betätigungsorgan wiederum unzerstört aus der Armaturentafel herausragt.

Der Erfindung liegt die Aufgabe zugrunde, den elektrischen Schalter mit verringertem Verletzungsrisiko derart weiterzuentwickeln, daß dessen unbeabsichtigte Zerstörung vermieden ist und der Schalter dabei einfach ausgestaltet ist.

Diese Aufgabe wird bei einem gattungsgemäßen elektrischen Schalter durch die kennzeichnenden Merkmale des Anspruchs 1 gelöst.

Der erfindungsgemäße elektrische Schalter ist derart ausgestaltet, daß das Betätigungsorgan wenigstens teilweise im Gehäuse versenkbar ist, wobei das im Gehäuse versenkte Betätigungsorgan durch eine Zugkraft in Gegenrichtung zur Versenkung wieder aus dem Gehäuse herausbewegbar ist. Vorteilhafterweise führt somit das unbeabsichtigte Versenken des Betätigungsorgans im Gehäuse, beispielsweise bei Reinigungsarbeiten im Kraftfahrzeug, nicht zur Zerstörung oder Beschädigung des Schalters. Das Betätigungsorgan wirkt mit einem Federelement im Gehäuse oder mit Schnapp- und/oder Rasthaken zusammen. Dadurch ist zum einen das Betätigungsorgan in der aus dem Gehäuse herausragenden Position gehalten, wobei jedoch die freie Drehbarkeit des Betätigungsorgans gegeben ist, um das Kontaktsystem zu schalten. Zum anderen geben jedoch das Federelement oder die Schnapp- und/oder Rasthaken bei Überschreiten der Schwellkraft das Betätigungsorgan frei, so daß dieses im Gehäuse versenkbar ist. Weitere Ausgestaltungen der Erfindung sind Gegenstand der Unteransprüche.

Vor allem wenn der Schalter zum Schalten der Leuchten an einem Kraftfahrzeug Verwendung findet, kann es sich um einen Drehschalter in der Art eines Drehrastschalters handeln. Bei einem solchen Drehrastschalter ist das Betätigungsorgan, beispielsweise mittels eines Schaftes, einer Achse o. dgl., drehbar im Gehäuse gelagert, und das Kontaktsystem wird durch eine Drehbewegung des Betätigungsorgans geschaltet. Bevorzugterweise ist dann das Betätigungsorgan in axialer Richtung in Bezug auf die Drehbewegung, insbesondere in etwa senkrecht zur Oberfläche des Gehäuses, an der das Betätigungsorgan herausragt, zur Versenkung in das Gehäuse bewegbar. Die axiale Versenkbarkeit des Betätigungsorgans bietet einfache Gestaltungsmöglichkeiten des Schalters.

Wird das versenkte Betätigungsorgan anschließend aus dem Gehäuse wieder manuell herausbewegt, so nimmt dieses dann erneut seine ursprüngliche, aus dem Gehäuse herausragende Position ein. Zweckmäßigerweise wird es dann in dieser Position wieder gehalten. Bei einem solcherart ausgestalteten Schalter kann das Betätigungsorgan auch absichtlich vom Benutzer versenkt werden, wenn der Schalter nicht gebraucht wird.

In einer einfach zu montierenden und kostengünstigen Ausgestaltung ist ein Federelement mit einem Ende im Gehäuse befestigt und wirkt mit seinem anderen freien Ende mit dem Betätigungsorgan zu dessen Halterung zusammen.

Ein derartiges Federelement läßt sich im Hinblick auf die Ausübung von symmetrischen Haltekräften noch dadurch verbessern, daß dieses in der Art einer in etwa U-förmigen Schenkelfeder ausgestaltet ist. Die Schenkelfeder ist an der Basis des U's im Gehäuse befestigt. Weiterhin greifen die beiden freien Schenkeln des U's unter Ausübung einer elastischen Klemmkraft in eine am Betätigungsorgan befindliche Nut ein. Aus Platzgründen sowie bei Bedarf können die Schenkel der Schenkelfeder abgekröpft sein.

In einer Weiterbildung ist die Vormontage des elektrischen Schalters vereinfacht. Hierzu weist das Betätigungsorgan einen im Gehäuse angeordneten Schaft, eine Achse o. dgl. auf. Der Schaft bzw. die Achse greift an einem das Kontaktsystem betätigenden Rotor derart an, daß zum einen der Rotor mittels des Betätigungsorgans drehbar sowie zum anderen der Schaft bzw. die Achse gegen den Rotor axial verschiebbar ist. Die Nut für die Aufnahme der Schenkel der Schenkelfeder befindet sich am Schaft bzw. an der Achse.

Zweckmäßigerweise ist der Rotor in einer im Gehäuse befindlichen Halterung drehbar gelagert. Handelt es sich um einen Drebrastschalter, so kann der Rotor mittels eines federbelasteten Stößels mit einer Rastkurve zur Festlegung der Rastpositionen zusammenwirken. Der Schaft bzw. die Achse des Betätigungsorgans ist in einem hülsenartigen Ansatz an einem Halteteil im Gehäuse gelagert. Schließlich ragen die Schenkel der Schenkelfeder durch eine Öffnung in das Halteteil hinein, womit ein Eingreifen der Schenkel in die Nut am Schaft bzw. der Achse ermöglicht ist.

Der erfindungsgemäße Schalter ist besonders zur Anordnung in einer Bedieneinheit in der Art eines Steuergerätes im Kraftfahrzeug geeignet, beispielsweise in einer Lichtbedieneinheit zum Schalten der Kraftfahrzeugbeleuchtung. In diesem Fall sind im und/oder am Gehäuse Betätigungsorgane für weitere Schalter, für Potentiometer o. dgl. angeordnet. Es kann sich bei den entsprechenden Betätigungsorganen um Drucktasten, Wippen, Rändelräder o. dgl. handeln. Mit diesen Betätigungsorganen sind zusätzlich zum Drehschalten, das mittels des versenkbaren Betätigungsorgans bewirkt wird, weitere Schaltfunktionen betätigbar. Vorteilhafterweise ist somit eine Vielzahl von verschiedenen Schaltfunktionen in einer kompakten Einheit ermöglicht.

Ist die Bedieneinheit als eine Art Steuergerät für das Kraftfahrzeug ausgestaltet, so bietet es sich weiterhin an, im Gehäuse eine Leiterplatte zur Aufnahme der Kontaktsysteme für die elektrischen Schalter, für die Potentiometer o. dgl. anzuordnen. Auf der Leiterplatte befindet sich eine Elektronik, beispielsweise ein Mikroprozessor, zur Verarbeitung der Schaltsignale. Falls gewünscht, kann die Elektronik Bussignale entsprechend den Schaltsignalen erzeugen. Zur Weiterleitung der Bussignale an das Bussystem im Kraftfahrzeug ist am Gehäuse ein mit der Leiterplatte in elektrischer Verbindung stehender Anschluß für das Bussystem angeordnet. Schließlich befinden sich auf der Leiterplatte noch Leuchtdioden zur Beleuchtung von Symbolen, Anzeigen o. dgl. an den Betätigungsorganen und/oder am Gehäuse. Das von den Leuchtdioden abgestrahlte Licht kann über entsprechende Lichtleitelemente zu den Betätigungsorganen und/oder zum Gehäuse geführt werden. Eine solche Ausgestaltung schafft eine modulartige Einheit, die in einfacher Weise im Kraftfahrzeug, beispielsweise lediglich durch Anstecken an das Bussystem, zu montieren ist.

In einer anderen Ausgestaltung, die ebenfalls einfach zu montieren ist, wenig Einzelteile umfaßt sowie auch kostengünstig ist, befinden sich die Schnapp- und/oder Rasthaken in einem hülsenartigen Ansatz im Gehäuse. Die Achse bzw. der Schaft ist im hülsenartigen Ansatz geführt sowie mittels der Schnapp- und/oder Rasthaken drehbar in der Position, in der das Betätigungsorgan aus dem Gehäuse herausragt, festgehalten. Zweckmäßigerweise greifen hierzu die Schnapp- und/oder Rasthaken in eine Nut an der Achse bzw. am Schaft ein. Bei Überschreiten der Schwellkraft erfolgt dann eine Aufspreizung der Schnapp- und/oder Rasthaken, derart daß die Achse bzw. der Schaft zur Versenkung des Betätigungsorgans im Gehäuse freigegeben ist.

Aus Gründen der Haltbarkeit bietet es sich an, daß das Federelement zur versenkbaren Halterung des Betätigungsorgans aus Metall besteht. Bei der Ausgestaltung, bei der Schnapp- und/oder Rasthaken vorgesehen sind, genügt es im allgemeinen, daß diese aus Kunststoff bestehen. Da das Gehäuse ebenfalls aus Kunststoff im Spritzgießverfahren hergestellt wird, können dann die Schnapp- und/oder Rasthaken in einfacher und kostengünstiger Weise bei Herstellung des Gehäuse einstückig an den hülsenartigen Ansatz angespritzt werden. Gleichzeitig läßt sich auch der hülsenförmige Ansatz beim Herstellen des Gehäuses mit Versteifungsrippen versehen. Zwecks kompakter Ausgestaltung sind die Schnapp- und/oder Rasthaken derart im Inneren des hülsenförmigen Ansatzes angeordnet, daß eine Bewegungsmöglichkeit in etwa quer zu axialen Richtung zu deren Aufspreizbarkeit gegeben ist. Zweckmäßigerweise kann sich an der Achse ein Anschlag befinden, so daß die Bewegung der Achse in axialer Richtung begrenzt ist. Damit ist beispielsweise ein zu tiefes Versenken des Betätigungsorgans im Gehäuse oder auch ein zu weites anschließendes Herausziehen verhindert.

Die mit der Erfindung erzielten Vorteile bestehen insbesondere darin, daß bei einer Kollision des Fahrzeugbenutzers mit dem Schalter das Betätigungsorgan in das Gehäuse des Schalters eintaucht, so daß eine dadurch bedingte Verletzung des Fahrzeugbenutzers, wie eine Knieverletzung, weitgehend verhindert ist. Darüber hinaus läßt sich bei Schaltern, die nur selten vom Benutzer zu betätigen sind, das Betätigungsorgan versenken, kann jedoch bei Bedarf wieder in die zur Betätigung dienende Position gebracht werden. Dadurch können Fehlbedienungen wirksam verhindert werden. Außerdem läßt sich so ein verbessertes Design des Fahrzeuginnenraums erreichen.

Weiterhin ist vorteilhaft, daß die erfindungsgemäße Ausgestaltung keine vorgespannten Kunststoffelemente im Gehäuse, beispielsweise durch Federelemente, benötigt sowie auch zu keiner dauerhaften Krafteinleitung, beispielsweise durch Federkräfte, in das Betätigungsorgan oder in andere Kunststoffbauteile des Gehäuses führt. Dadurch ist eine lange Lebensdauer des Schalters gewährleistet. Darüberhinaus sind variable Eintauch- und Rückziehkräfte für das Betätigungsorgan realisierbar, welche jedoch andererseits die Drehhaptik für den Benutzer nicht beeinflussen. Schließlich ist auch eine einfache Montage des Schalters gegeben, da keine Vorspannkräfte von Federelementen aufgebracht werden müssen und die Montage in etwa senkrecht zur Versenkrichtung erfolgt.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: eine Lichtbedieneinheit für ein Kraftfahrzeug in perspektivischer Ansicht und teilweiser Explosionsdarstellung,
- Fig. 2: die Lichtbedieneinheit wie in Fig. 1, jedoch ohne Betätigungsorgan sowie in erweiterter Explosionsdarstellung,
- Fig. 3: die Lichtbedieneinheit wie in Fig. 2, wobei das Gehäuse entfernt ist,
- Fig. 4: eine Explosionsdarstellung der Lichtbedieneinheit entsprechend Fig. 3,
- Fig. 5: das Betätigungsorgan mit Halteteil als Einzelteil in perspektivischer Ansicht,
- Fig. 6: das Betätigungsorgan mit Halterung aus Fig. 5 in Seitenansicht,
- Fig. 7: eine Lichtbedieneinheit in einer weiteren Ausführung, ansonsten jedoch in einer Ansicht wie in Fig. 1,
- Fig. 8: ein Einzelteil des Gehäuses aus Fig. 7 in Draufsicht,
- Fig. 9: einen Schnitt entlang der Linie 9-9 in Fig. 8,
- Fig. 10: die Achse für das Betätigungsorgan als Einzelteil und
- Fig. 11: schematisch das Zusammenwirken zwischen der Achse und den Schnapp- und/oder Rasthaken.

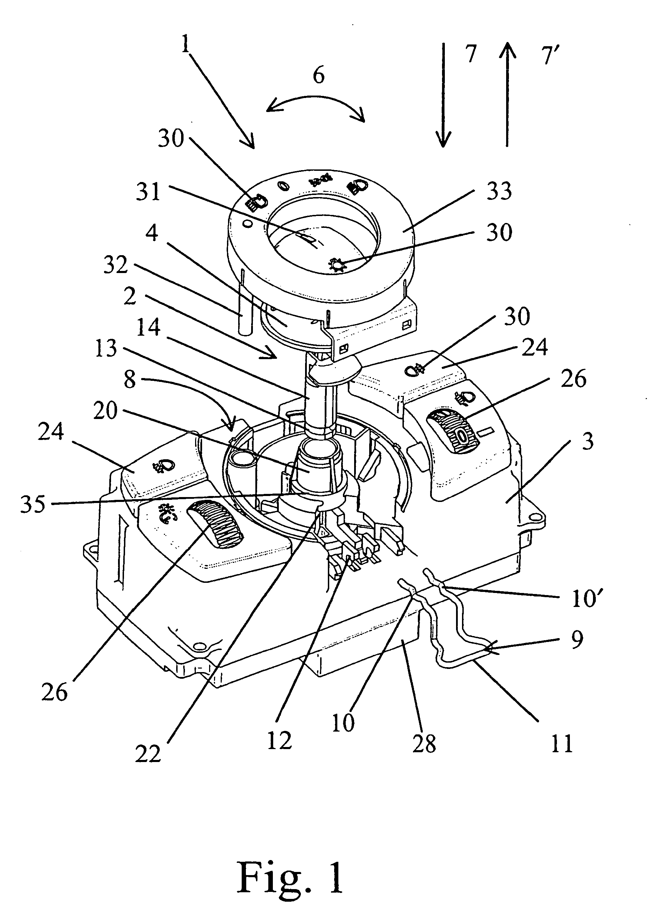

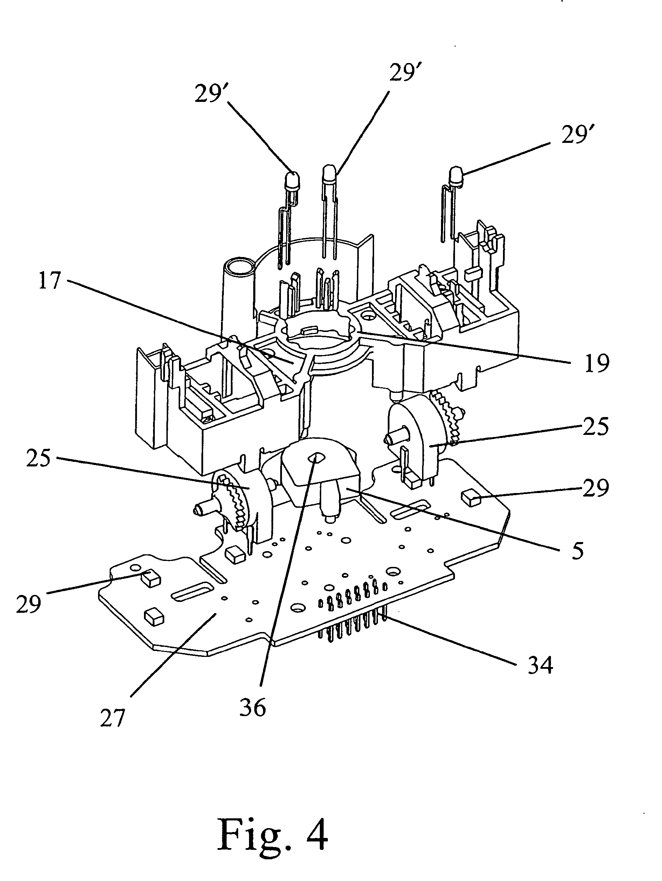

In Fig. 1 ist eine als Steuergerät ausgebildete Lichtbedieneinheit 1 für ein Kraftfahrzeug in teilweiser Explosionsdarstellung gezeigt. Die Lichtbedieneinheit 1 umfaßt einen elektrischen Schalter 2 zum Schalten der Beleuchtung des Kraftfahrzeugs. Weiter besitzt die Lichtbedieneinheit 1 ein Gehäuse 3, aus dem ein Betätigungsorgan 4 zur Bedienung des elektrischen Schalters 2 durch den Benutzer herausragt. Im Gehäuse 3 befindet sich weiter ein in Fig. 4 sichtbares Kontaktsystem 5, das zur Verhinderung von Verschmutzungen gekapselt ist. Das Kontaktsystem 5 ist mittels des Betätigungsorgans 4 schaltbar. Das Betätigungsorgan 4 ist derart augestaltet, daß durch Einwirkung einer einen Schwellwert überschreitenden Kraft auf das Betätigungsorgan 4, dieses wenigstens teilweise im Gehäuse 3 versenkbar ist. Als zweckmäßig für Kraftfahrzeuganwendungen hat es sich herausgestellt, wenn der Schwellwert für die Kraft ca. 300 bis 400 Newton beträgt.

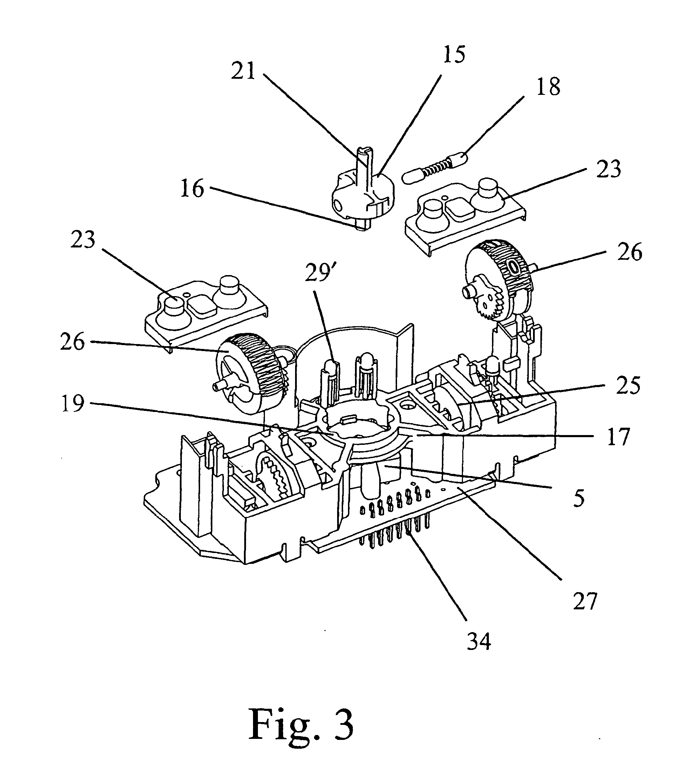

Bei dem elektrischen Schalter 2 handelt es sich um einen Drehrastschalter, bei dem das Betätigungsorgan 4 drehbar im Gehäuse 3 gelagert ist. Das in der Art eines Drehknopfes ausgebildete Betätigungsorgan 4 ist von einer Blende 33 umgeben. Das Kontaktsystem 5 wird somit durch eine manuelle Drehbewegung des Betätigungsorgans 4 gemäß Pfeil 6 vom Benutzer geschaltet. Hierfür weist das Betätigungsorgan 4 einen im Gehäuse 3 angeordneten Schaft 14 bzw. eine Achse 14 auf, wobei der Schaft 14 an einem in Fig. 3 sichtbaren Rotor 15 derart angreift, daß der Rotor 15 mittels des Betätigungsorgans 4 drehbar ist. Wie weiter aus Fig. 3 hervorgeht, ist der Rotor 15 seinerseits in einer im Gehäuse 3 befindlichen Halterung 17 drehbar gelagert und wirkt mittels eines federbelasteten Stößels 18 mit einer Rastkurve 19 in der Halterung 17 zur Festlegung der Rastpositionen zusammen. Der Rotor 15 betätigt wiederum das Kontaktsystem 5 mittels eines Ansatzes 16, der in eine in Fig. 4 sichtbare Aufnahme 36 am Kontaktsystem 5 eingreift.

Wie man in Fig. 1 sieht, ist der Schaft 14 am Betätigungsorgan 4 in einem hülsenartigen Ansatz 20 an einem Halteteil 35 im Gehäuse 3 gelagert. Zweckmäßigerweise ist nun das Betätigungsorgan 4 in axialer Richtung entsprechend dem Pfeil 7 in Bezug auf die Drehbewegung, und damit in etwa senkrecht zu der Oberfläche 8 des Gehäuses 3, an der das Betätigungsorgan 4 herausragt, zur Versenkung in das Gehäuse 3 bewegbar. Hierzu ist der Schaft 14 gegen den Rotor 15 axial verschiebbar, indem der hülsenförmige Schaft 14 eine Welle 21 am Rotor 15 übergreift, wie anhand der beiden Fig. 1 und 3 zu erkennen ist. Die Welle 21 und der hülsenförmige Schaft 14 sind im übrigen gleichermaßen profiliert ausgestaltet, um trotz der axialen Verschiebbarkeit des Schaftes 14 ein Drehen des Rotors 15 mittels des Betätigungsorgans 4 zu gestatten. Ist das Betätigungsorgan 4 im Gehäuse 3 versenkt, so läßt sich dieses durch eine vom Benutzer aufgebrachte Zugkraft in Gegenrichtung zur Versenkung entsprechend dem Pfeil 7' wieder aus dem Gehäuse 3 herausbewegen. Die Bewegung in axialer Richtung gemäß Pfeil 7' erfolgt dann soweit bis das Betätigungsorgan 4 wieder in seine ursprüngliche, aus dem Gehäuse 3 herausragende Position gelangt, in der das Betätigungsorgan 4 dann gehalten ist.

Um das Betätigungsorgan 4 in der aus dem Gehäuse 3 herausragenden Position zu halten, ist gemäß dem in Fig. 1 gezeigten ersten Ausführungsbeispiel ein Federelement 9 mit einem Ende im Gehäuse 3 befestigt. Mit seinem anderen freien Ende wirkt das Federelement 9 mit dem Betätigungsorgan 4 zusammen. Dadurch ist zum einen, wie bereits erwähnt, das Betätigungsorgan 4 in der aus dem Gehäuse 3 herausragenden Position gehalten, wobei das Betätigungsorgan 4 gleichzeitig zum Schalten des Kontaktsystems 5 frei drehbar ist. Zum anderen gibt das Federelement 9 jedoch bei Überschreiten der Schwellkraft das Betätigungsorgan 4 frei, so daß dieses in das Gehäuse 3 eintauchen kann.

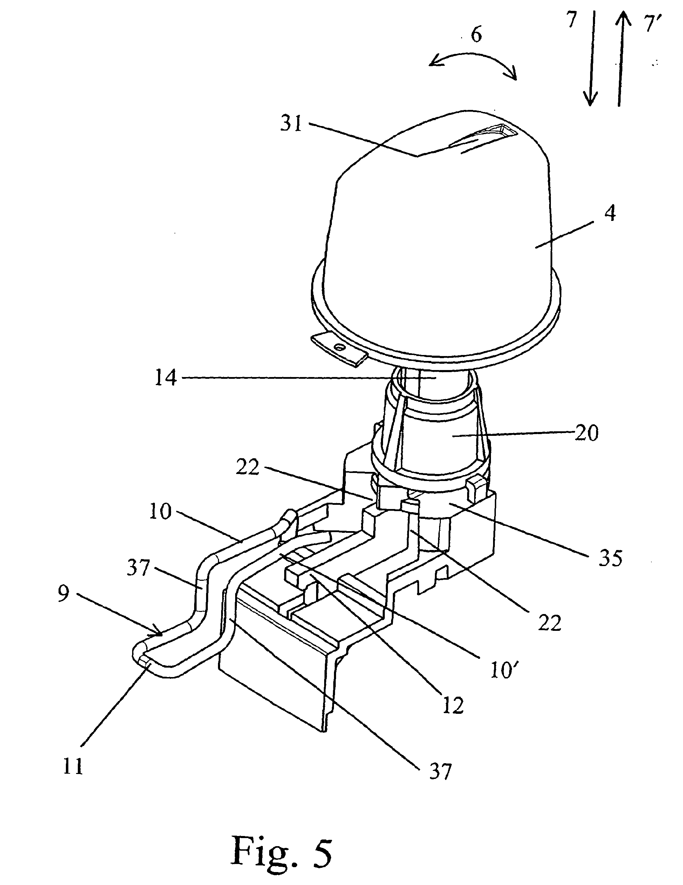

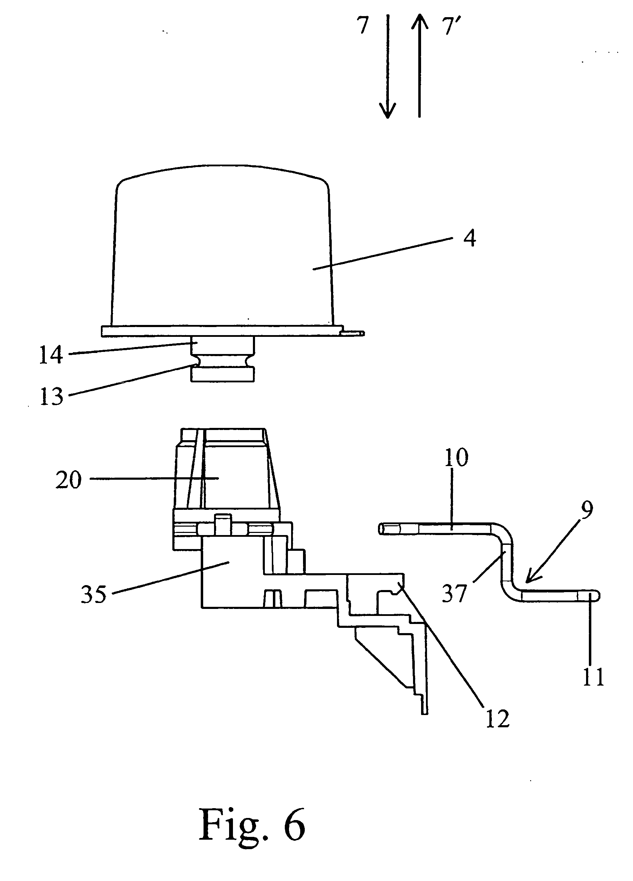

Wie man näher anhand der Fig. 5 sieht, ist das Federelement 9 in der Art einer in etwa U-förmigen Schenkelfeder ausgestaltet. Die Schenkelfeder 9 ist an der Basis 11 des U's an Rasthaken 12, die sich am Halteteil 35 befinden, im Gehäuse 3 verclipsend befestigt. Die beiden freien Schenkel 10, 10' des U's der Schenkelfeder 9 verlaufen in etwa senkrecht zur axialen Richtung 7, 7' und ragen durch eine Öffnung 22 in das Halteteil 35 hinein. Im Bereich der Öffnung 22 liegen die Schenkel 10, 10' am Halteteil 35 auf und greifen im Halteteil 35 in eine am Betätigungsorgan 4, und zwar am Schaft 14 befindliche sowie in Fig. 6 sichtbare Nut 13 unter Ausübung einer elastischen Klemmkraft ein. Aufgrund dieser Klemmkraft wird das Betätigungsorgan 4 in seiner aus dem Gehäuse 3 herausragenden Position gehalten. Der kompakten Anordnung halber im Gehäuse 3 können die Schenkel 10, 10' mit einer Abkröpfung 37 versehen sein, wie in Fig. 6 gezeigt ist.

Bei Krafteinleitung auf das Betätigungsorgan 4 in axialer Richtung, die einen bestimmten Schwellwert überschreitet, spreizen sich die Schenkel 10, 10' auf, und das Betätigungsorgan 4 taucht dann in das Gehäuse 3 ein. Wie in Fig. 6 angedeutet ist, ist die am Schaft 14 umlaufende Nut 13 mit einer Schräge in der Art einer schiefen Ebene versehen. Durch Änderung des Winkel der schiefen Ebene läßt sich somit der Schwellwert für die Eintauchkraft wunschgemäß variieren. Genausogut läßt sich eine variable Eintauch- und Rückziehkraft für das Betätigungsorgan 4 durch eine veränderte Geometrie der Nut 13 und/oder Federkraft der Schenkel 10, 10' und/oder Materialwahl für das Federelement 9 realisieren. Hervorzuheben ist jedoch, daß die vom Benutzer fühlbare Haptik für die Drehung des Betätigungsorgans 4 durch das Federelement 9 an sich im wesentlichen unbeeinflußt bleibt. Beim Herausziehen des Betätigungsorgans 4 aus dem Gehäuse 3 springen dann die Schenkel 10, 10' bei Erreichen der ursprünglichen Position wieder in die Nut 13 zurück.

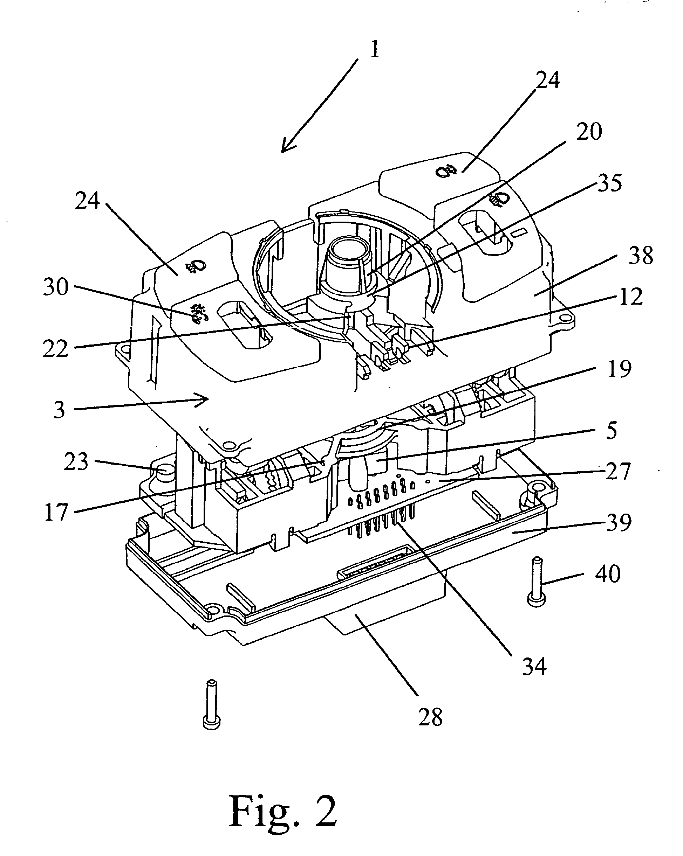

Wie in Fig. 2 zu sehen ist, können im und/oder am Gehäuse 3 der Lichtbedieneinheit 1 noch weitere Schalter mit Kontaktsystemen 23 angeordnet sein, beispielsweise um die Parkleuchten am Kraftfahrzeug zu schalten. Die Betätigungsorgane 24 für die Kontaktsysteme 23 sind als Drucktasten ausgebildet. Ebenso können diese Betätigungsorgane in der Art von Wippen ausgebildet sein, was jedoch nicht weiter gezeigt ist. Weiterhin befinden sich im Gehäuse 3 noch in Fig. 4 sichtbare Potentiometer 25, beispielsweise für eine Leuchtweitenregelung des Kraftfahrzeugs und/oder eine Dimmfunktion der Lichtbedieneinheit 1. Die Potentiometer 25 werden mittels Rändelräder 26 als Betätigungsorgane durch den Benutzer bedient. Selbstverständlich können auch sonstige, nicht weiter gezeigte Bedienelemente in der Lichtbedieneinheit 1 angeordnet sein, so daß noch sonstige weitere Schaltfunktionen zusätzlich zum Drehschalten, das mittels des Betätigungsorgans 4 bewirkbar ist, sowie den genannten Schaltfunktionen durch den Benutzer betätigbar sind.

Wie weiter in Fig. 2 gezeigt ist, besteht das Gehäuse 3 aus einem Oberteil 38 und einem Unterteil 39, die miteinander durch Schrauben 40 verbunden sind. Im Gehäuse 3 ist eine Leiterplatte 27 zur Aufnahme des wenigstens einen Kontaktsystems 5 angeordnet. Falls vorhanden, befinden sich zweckmäßigerweise auch die weiteren Kontaktsysteme 23 sowie die Potentiometer 25 und/oder die weiteren elektrischen/elektronischen Bauelemente auf der Leiterplatte 27. Soweit gewünscht ist auf der Leiterplatte 27 eine Elektronik, beispielsweise ein Mikroprozessor, zur Verarbeitung der Schaltsignale der Kontaktsysteme 5, 23 sowie der Potentiometer 25 und gegebenenfalls zur Erzeugung von Bussignalen befindlich. Am Gehäuse 3 ist ein mit der Leiterplatte 27 über Verbindungsstifte 34 in elektrischer Verbindung stehender elektrischer Anschluß 28 für ein Bussystem angeordnet. Selbstverständlich können die Schaltsignale der Kontaktsysteme 5, 23 sowie der Potentiometer 25 auch direkt über den Anschluß 28 zu einem Steuergerät für die Kraftfahrzeug-Beleuchtung weitergeleitet werden, so daß in diesem Fall auf eine entsprechende Elektronik zur Verarbeitung der Schaltsignale in der Lichtbedieneinheit 1 verzichtet werden kann. Schließlich befinden sich auf der Leiterplatte 27 noch in Fig. 4 sichtbare Leuchtdioden 29, 29' zur Beleuchtung von in Fig. 1 dargestellten Symbolen 30, Anzeigen 31 o. dgl. an den Betätigungsorganen 4, 24, 26 und/oder am Gehäuse 3 und/oder an der Blende 33, um dem Benutzer eine entsprechende Orientierung zu gestatten. Das von den Leuchtdioden 29 abgestrahlte Licht kann über Lichtleitelemente 32 zu den zugehörigen Symbolen 30 oder Anzeigen 31 geführt werden.

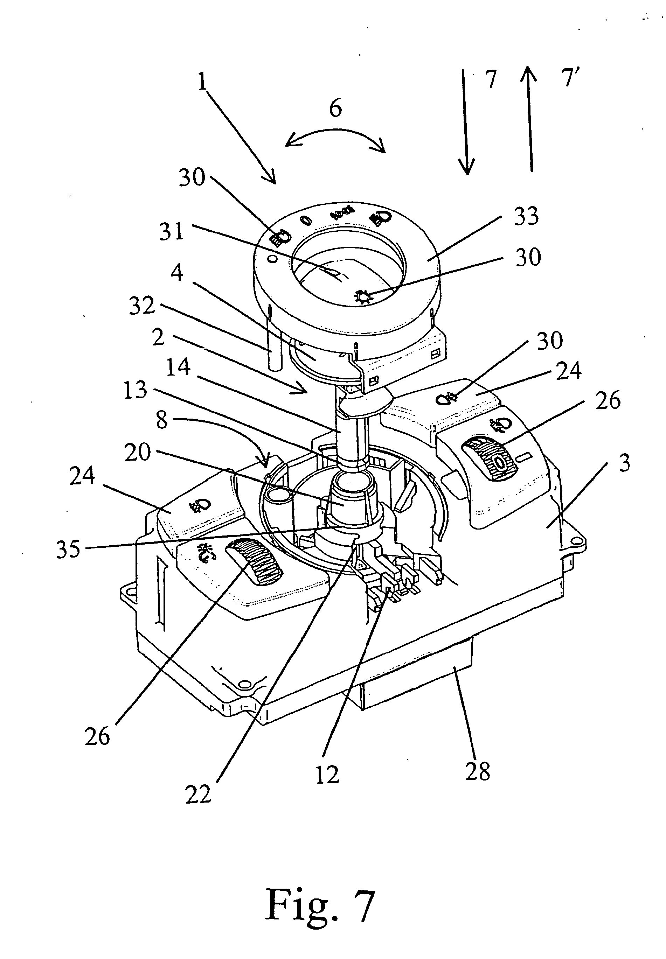

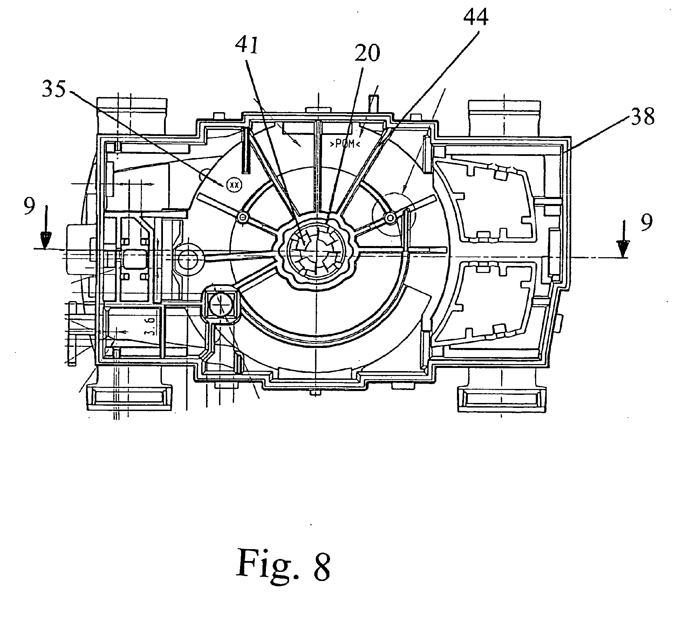

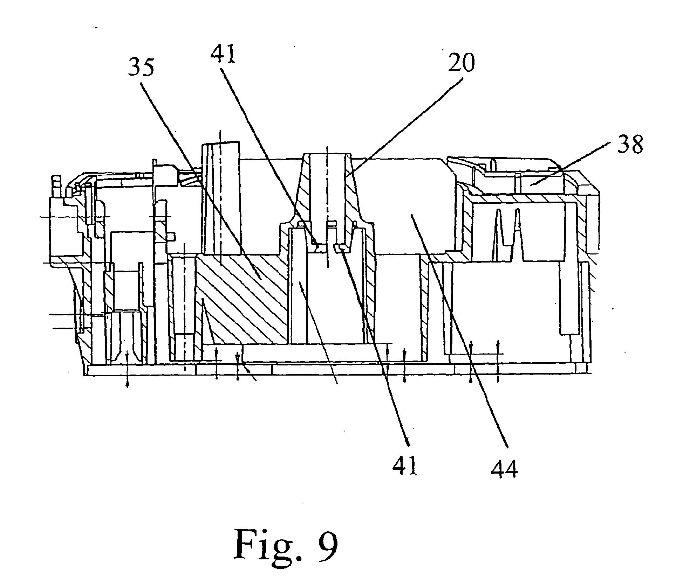

Eine Lichtbedieneinheit 1 gemäß einem weiteren, zweiten Ausführungsbeispiel ist in perspektivischer Ansicht in Fig. 7 gezeigt. Bei dieser Lichtbedieneinheit 1 ist kein Federelement 9 verwendet, ansonsten ist diese jedoch im wesentlichen gleich wie diejenige des ersten Ausführungsbeispiels ausgestaltet, so daß auch hier zur Verdeutlichung noch die Fig. 2 bis 4 herangezogen werden können. Anstelle des Federelements 9 befinden sich bei dieser weiteren Ausführung im hülsenartigen Ansatz 20 des Gehäuses 3 Schnapp- und/oder Rasthaken 41, wie anhand der Fig. 8 oder 9 zu erkennen ist, um das Betätigungsorgan 4 in der aus dem Gehäuse 3 herausragenden Position zu halten.

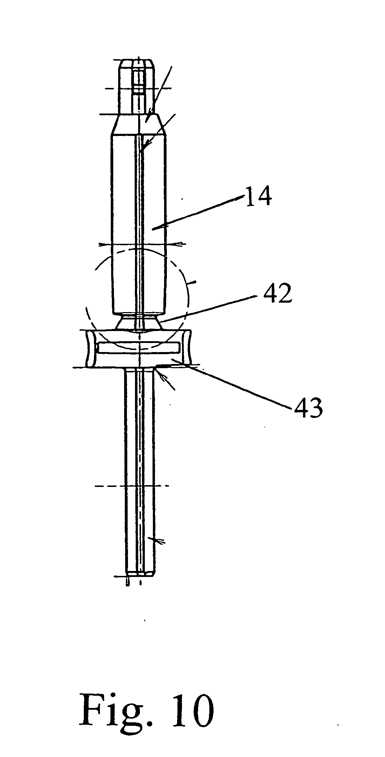

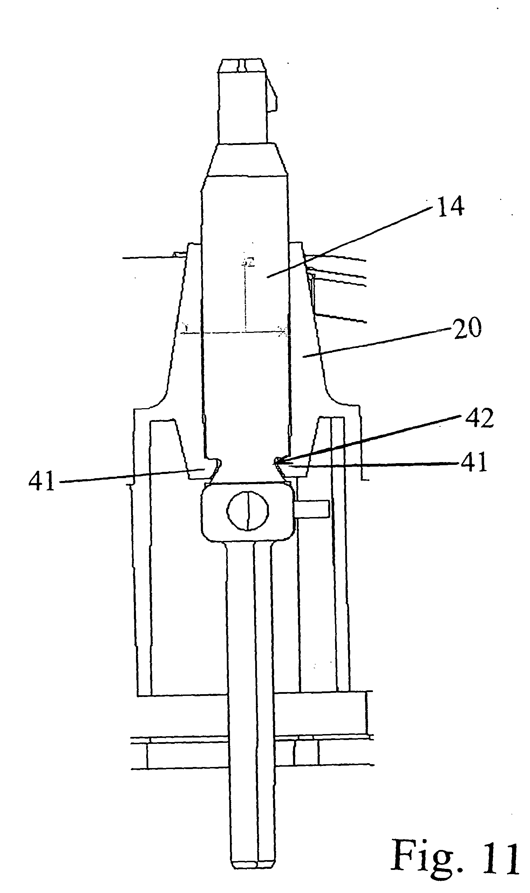

Die Schnapp- und/oder Rasthaken 41 greifen in eine in Fig. 10 sichtbare Nut 42 an der Achse 14 ein. Wie in Fig. 11 schematisch gezeigt ist, ist dadurch die im hülsenartigen Ansatz 20 geführte Achse 14 mittels der Schnapp- und/oder Rasthaken 41 in der Position, in der das Betätigungsorgan 4 aus dem Gehäuse 3 herausragt, festgehalten, wobei jedoch die freie Drehbarkeit der Achse 14 zum Schalten des Kontaktsystems 5 gewährleistet ist. Bei Überschreiten der Schwellkraft erfolgt dann eine Aufspreizung der Schnapp- und/oder Rasthaken 41, derart daß die Achse 14 zur Versenkung des Betätigungsorgans 4 im Gehäuse 3 freigegeben ist. Aufgrund der Elastizität der Schnapp- und/oder Rasthaken 41 schnappen diese dann beim Herausziehen des Betätigungsorgans 4 aus dem Gehäuse 3 wieder in die Nut 42 ein. Wie besonders deutlich in Fig. 10 gezeigt ist, ist die Nut 42 zum Zweck der Anpassung des Schwellwerts als einseitig schiefe Ebene ausgestaltet.

Das in Fig. 5 gezeigte Federelement 9 besteht zweckmäßigerweise aus Metall. Die in Fig. 9 sichtbaren Schnapp- und/oder Rasthaken 41 bestehen aus Kunststoff. Da das Gehäuse 3 ebenfalls aus Kunststoff besteht, können die Schnapp- und/oder Rasthaken 41 bei Herstellung des Oberteils 38 des Gehäuses 3 einstückig an den hülsenartigen Ansatz 20 angespritzt werden. Die Schnapp- und/oder Rasthaken 41 sind, wie anhand der Fig. 9 zu erkennen ist, derart im Inneren des hülsenförmigen Ansatzes 20 angeordnet, daß eine Bewegungsmöglichkeit in etwa quer zu axialen Richtung 7, 7' gegeben ist, um die Aufspreizbarkeit der Schnapp- und/oder Rasthaken 41 zu ermöglichen. An der Achse 14 befindet sich ein Anschlag 43, wie in Fig. 10 zu sehen ist, der zur Begrenzung der Bewegung der Achse 14 in axialer Richtung 7, 7' dient. Schließlich ist entsprechend der Fig. 8 der hülsenförmige Ansatz 20 mit im Gehäuse 3 befindlichen Versteifungsrippen 44 versehen.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann die Erfindung nicht nur an elektrischen Schaltern für Kraftfahrzeuge eingesetzt werden, sondern auch an Schaltern mit einem versenkbaren Betätigungsorgan für Haushaltsgeräte, Werkzeugmaschinen, Elektrowerkzeuge o. dgl. Verwendung finden.

### Bezugszeichen-Liste:

- 1:: Lichtbedieneinheit
- 2:: elektrischer Schalter
- 3:: Gehäuse
- 4:: Betätigungsorgan
- 5:: Kontaktsystem
- 6:: Pfeil für Drehbewegung
- 7:: Pfeil für axiale Richtung
- 7':: Pfeil für Gegenrichtung
- 8:: Oberfläche (von Gehäuse)
- 9:: Federelement / (U-förmige) Schenkelfeder
- 10,10':: Schenkel (von Federelement)
- 11:: Basis (von Federelement)
- 12:: Rasthaken (für Befestigung von Federelement)
- 13:: Nut
- 14:: Schaft / Achse (an Betätigungsorgan)
- 15:: Rotor
- 16:: Ansatz (am Rotor)
- 17:: Halterung (für den Rotor)
- 18:: Stößel (am Rotor)
- 19:: Rastkurve
- 20:: hülsenartiger Ansatz
- 21:: Welle
- 22:: Öffnung (in Halteteil)
- 23:: Kontaktsystem (von weiterem Schalter)
- 24:: Betätigungsorgan (für weiteren Schalter)
- 25:: Potentiometer
- 26:: Betätigungsorgan / Rändelrad (von Potentiometer)
- 27:: Leiterplatte
- 28:: elektrischer Anschluß
- 29,29':: Leuchtdiode
- 30:: Symbol
- 31:: Anzeige
- 32:: Lichtleitelement
- 33:: Blende
- 34:: Verbindungsstift
- 35:: Halteteil (für hülsenartigen Ansatz)
- 36:: Aufnahme (am Kontaktsystem)
- 37:: Abkröpfung (an Schenkel)
- 38:: Oberteil (von Gehäuse)
- 39:: Unterteil (von Gehäuse)
- 40:: Schraube
- 41:: Schnapp- und/oder Rasthaken
- 42:: Nut (in der Achse)
- 43:: Anschlag
- 44:: Versteifungsrippe

## Patentansprüche

1. Elektrischer Schalter, insbesondere für ein Kraftfahrzeug, wie für eine Lichtbedieneinheit (1) in einem Kraftfahrzeug, mit einem Gehäuse (3), mit einem aus dem Gehäuse (3) ragenden Betätigungsorgan (4), und mit einem im Gehäuse (3) befindlichen, mittels des Betätigungsorgans (4) schaltbaren Kontaktsystem (5), wobei das Betätigungsorgan (4) durch Einwirkung einer einen Schwellwert überschreitenden Kraft versenkbar ist, und wobei das versenkte Betätigungsorgan (4) durch eine Zugkraft in Gegenrichtung (7') zur Versenkung herausbewegbar ist, derart daß das Betätigungsorgan (4) nach dessen Versenken und anschließenden Herausbewegen wieder in seiner ursprünglichen herausragenden Position gehalten ist, **dadurch gekennzeichnet, daß** das Betätigungsorgan (4) wenigstens teilweise im Gehäuse (3) versenkbar ist, und daß das Betätigungsorgan (4) mit einem Federelement (9) im Gehäuse (3) oder mit Schnapp- und/oder Rasthaken (41) derart zusammenwirkt, daß zum einen das Betätigungsorgan (4) in der aus dem Gehäuse (3) herausragenden Position gehalten ist, insbesondere unter freier Drehbarkeit, sowie zum anderen bei Überschreiten der Schwellkraft das Betätigungsorgan (4) zur Versenkung freigegeben ist.

2. Elektrischer Schalter nach Anspruch 1, **dadurch gekennzeichnet, daß** das Betätigungsorgan (4), bevorzugterweise mittels eines Schafts (14), einer Achse (14) o. dgl., drehbar im Gehäuse (3) gelagert ist, insbesondere in der Art eines Drehrastschalters, derart daß das Kontaktsystem (5) durch eine Drehbewegung des Betätigungsorgans (4) geschaltet wird, und daß vorzugsweise das Betätigungsorgan (4) in axialer Richtung (7) in Bezug auf die Drehbewegung (6), insbesondere in etwa senkrecht zu der Oberfläche (8) des Gehäuses (3), an der das Betätigungsorgan (4) herausragt, zur Versenkung in das Gehäuse (3) bewegbar ist.

3. Elektrischer Schalter nach Anspruch 1 oder 2, **dadurch gekennzeichnet, daß** ein Federelement (9) mit einem Ende im Gehäuse (3) befestigt ist und mit dem anderen freien Ende mit dem Betätigungsorgan (4) zusammenwirkt.

4. Elektrischer Schalter nach Anspruch 1, 2 oder 3, **dadurch gekennzeichnet, daß** das Federelement (9) in der Art einer in etwa U-förmigen Schenkelfeder ausgestaltet ist, daß vorzugsweise die Schenkelfeder (9) an der Basis (11) des U's im Gehäuse (3) befestigt ist, und daß weiter vorzugsweise die beiden freien, gegebenenfalls abgekröpften Schenkel (10, 10') des U's in eine am Betätigungsorgan (4) befindliche Nut (13) unter einer elastischen Klemmkraft eingreifen.

5. Elektrischer Schalter nach einem der Ansprüche 1 bis 4, **dadurch gekennzeichnet, daß** das Betätigungsorgan (4) einen im Gehäuse (3) angeordneten Schaft (14), eine Achse (14) o. dgl. aufweist, daß vorzugsweise der Schaft (14), die Achse (14) o. dgl. an einem das Kontaktsystem (5) betätigenden Rotor (15) derart angreift, daß zum einen der Rotor (15) mittels des Betätigungsorgans (4) drehbar sowie zum anderen der Schaft (14), die Achse (14) o. dgl. gegen den Rotor (15) axial verschiebbar ist, und daß weiter vorzugsweise die Nut (13) für die Aufnahme der Schenkel (10, 10') der Schenkelfeder (9) am Schaft (14), der Achse (14) o. dgl. befindlich ist.

6. Elektrischer Schalter nach einem der Ansprüche 1 bis 5, **dadurch gekennzeichnet, daß** der Rotor (15) in einer im Gehäuse (3) befindlichen Halterung (17) drehbar gelagert ist, daß vorzugsweise der Rotor (15) mittels eines federbelasteten Stößels (18) mit einer Rastkurve (19) zur Festlegung der Rastpositionen zusammenwirkt, daß weiter vorzugsweise der Schaft (14), die Achse (14) o. dgl. in einem hülsenartigen Ansatz (20) an einem Halteteil (35) im Gehäuse (3) gelagert ist, und daß noch weiter vorzugsweise die Schenkel (10, 10') der Schenkelfeder (9) durch eine Öffnung (22) in das Halteteil (35) zum Eingreifen in die Nut (13) am Schaft (14) hineinragen.

7. Elektrischer Schalter nach einem der Ansprüche 1 bis 6, **dadurch gekennzeichnet, daß** im und/oder am Gehäuse (3) Betätigungsorgane (24, 26), insbesondere in der Art von Drucktasten, Wippen, Rändelrädern o. dgl., für Kontaktsysteme (23) von weiteren Schaltern, für Potentiometer (25) o. dgl. angeordnet sind, so daß zusätzlich zum mittels des Betätigungsorgans (4) bewirkbaren Drehschalten weitere Schaltfunktionen betätigbar sind.

8. Elektrischer Schalter nach einem der Ansprüche 1 bis 7, **dadurch gekennzeichnet, daß** im Gehäuse (3) eine Leiterplatte (27) zur Aufnahme des wenigstens einen Kontaktsystems (5, 23), des Potentiometers (25) o. dgl. angeordnet ist, daß vorzugsweise auf der Leiterplatte (27) eine Elektronik zur Verarbeitung der Schaltsignale sowie gegebenenfalls zur Erzeugung von Bussignalen befindlich ist, daß weiter vorzugsweise am Gehäuse (3) ein mit der Leiterplatte (27) in elektrischer Verbindung stehender Anschluß (28), insbesondere für ein Bussystem angeordnet ist, und daß noch weiter vorzugsweise auf der Leiterplatte (27) Leuchtdioden (29, 29') zur Beleuchtung, insbesondere über Lichtleitelemente (32), von Symbolen (30), Anzeigen (31) o. dgl. an den Betätigungsorganen (4, 24, 26) und/oder am Gehäuse (3) befindlich sind.

9. Elektrischer Schalter nach einem der Ansprüche 1 bis 8, **dadurch gekennzeichnet, daß** die Schnapp- und/oder Rasthaken (41) in einem hülsenartigen Ansatz (20) im Gehäuse (3) befindlich sind, daß vorzugsweise die insbesondere im hülsenartigen Ansatz (20) geführte Achse (14) mittels der Schnapp- und/oder Rasthaken (41) in der Position, in der das Betätigungsorgan (4) aus dem Gehäuse (3) herausragt, insbesondere unter freier Drehbarkeit, festgehalten ist, daß weiter vorzugsweise die Schnapp- und/oder Rasthaken (41) in eine Nut (42) an der Achse (14) eingreifen, und daß noch weiter vorzugsweise bei Überschreiten der Schwellkraft eine Aufspreizung der Schnapp- und/oder Rasthaken (41) erfolgt, derart daß die Achse (14) zur Versenkung des Betätigungsorgans (4) im Gehäuse (3) freigegeben ist.

10. Elektrischer Schalter nach einem der Ansprüche 1 bis 9, **dadurch gekennzeichnet, daß** das Federelement (9) aus Metall besteht.

11. Elektrischer Schalter nach einem der Ansprüche 1 bis 9, **dadurch gekennzeichnet, daß** die Schnapp- und/oder Rasthaken (41) aus Kunststoff bestehen, die insbesondere einstückig an dem hülsenartigen Ansatz (20) angespritzt sind, daß vorzugsweise die Schnapp- und/oder Rasthaken (41) derart im Inneren des hülsenförmigen Ansatzes (20) angeordnet sind, daß eine Bewegungsmöglichkeit in etwa quer zu axialen Richtung (7, 7') zu deren Aufspreizbarkeit gegeben ist, daß weiter vorzugsweise an der Achse (14) ein Anschlag (43) zur Begrenzung der Bewegung der Achse (14) in axialer Richtung (7, 7') befindlich ist, und daß noch weiter vorzugsweise der hülsenförmige Ansatz (20) mit im Gehäuse (3) befindlichen Versteifungsrippen (44) versehen ist.

## Claims

1. Electric switch, in particular for a motor vehicle, such as for a light-operating unit (1) in a motor vehicle, with a housing (3), with an actuating member (4) projecting out of the housing (3), and with a contact system (5) located in the housing (3) that can be controlled by means of the actuating member (4), whereby the actuating member (4) can be recessed by means of a force exceeding a threshold value, and whereby the recessed actuating member (4) can be moved out of the recess by a pulling force in the opposite direction (7'), such that the actuating member (4) after being recessed and then moved out is held again in its original projecting position, **characterised in that** the actuating member (4) can be recessed at least partly in the housing (3), and **in that** the actuating member (4) cooperates with a spring element (9) in the housing (3) or with snap and/or detent hooks (41), so that on the one hand the actuating member (4) is held in the position projecting out of the housing (3), in particular in a freely rotatable manner, and on the other hand when the threshold force is exceeded the actuating member (4) is released for recessing.

2. Electric switch according to claim 1, **characterised in that** the actuating member (4) is mounted rotatably in the housing (3), preferably by means of a shaft (14), an axle (14) or the like, in particular as a kind of rotary locking switch, such that the contact system (5) is controlled by a rotary movement of the actuating member (4), and **in that** preferably the actuating member (4) can be moved in axial direction (7) in relation to the rotary movement (6), in particular perpendicular to the surface (8) of the housing (3), from which the actuating member (4) projects, for recessing into the housing (3).

3. Electric switch according to claim 1 or 2, **characterised in that** a spring element (9) is secured at one end in the housing (3) and cooperates at the other free end with the actuating member (4).

4. Electric switch according to claim 1, 2 or 3, **characterised in that** the spring element (9) is designed as a kind of U-shaped leg spring, **in that** preferably the leg spring (9) is secured to the base (11) of the U in the housing (3), and **in that** also preferably the two free, possibly crimped legs (10, 10') of the U engage in a groove (13) located on the actuating member (4) under elastic clamping force.

5. Electric switch according to one of claims 1 to 4, **characterised in that** the actuating member (4) comprises a shaft (14), axle (14) or the like arranged in the housing (3), **in that** preferably the shaft (14), axle (14) or the like, is attached to a rotor (15) operating the contact system (5), such that on the one hand the rotor (15) can be rotated by means of the actuating member (4) and on the other hand the shaft (14), axle (14) or the like can be displaced axially relative to the rotor (15), and **in that** also preferably the groove (13) for mounting the legs (10, 10') of the leg spring (9) is located on the shaft (14), axle (14) or the like.

6. Electric switch according to one of claims 1 to 5, **characterised in that** the rotor (15) is rotatably mounted in a holder (17) located in a housing (3), **in that** preferably the rotor (15) cooperates by means of a spring-loaded ram (18) with a detent curve (19) for securing the detent positions, **in that** also preferably the shaft (14), axle (14) or the like is mounted in a sleeve-type shoulder (20) on a holding part (35) in the housing (3), and **in that** also preferably the legs (10,10') of the leg spring (9) project through an opening (22) into the holding part (35) for engagement in the groove (13) on the shaft (14).

7. Electric switch according to one of claims 1 to 6, **characterised in that** in and/or on the housing (3) actuating members (24, 26), in particular in the form of pushbuttons, rockers, knurled wheels or the like, are arranged for contact systems (23) of additional switches for potentiometers (25) or the like, so that in addition to rotational switching actuatable by means of the actuating member (4) further switching functions can be actuated.

8. Electric switch according to one of claims 1 to 7, **characterised in that** in the housing (3) a circuit board (27) is arranged for mounting the at least one contact system (5, 23) of the potentiometer (25) or the like, **in that** preferably on the circuit board (27) electronics are located for processing the switching signals and if necessary for generating bus signals, **in that** also preferably on the housing (3) there is a connection (28) in electrical contact with the circuit board (27), in particular for a bus system, and **in that** also preferably on the circuit board (27) light-emitting diodes (29, 29') are arranged to illuminate, in particular via optical-fibre elements (32), symbols (30), displays (31) or the like on the actuating members (4, 24, 26) and/or on the housing (3).

9. Electric switch according to one of claims 1 to 8, **characterised in that** the snap and/or detent hooks (41) are located in a sleeve-shape shoulder (20) in the housing (3), **in that** preferably the axle (14) guided in particular in the sleeve-shaped shoulder (20) is secured by means of the snap and/or detent hooks (41) in the position in which the actuating member (4) projects out of the housing (3), in particular so as to be freely rotatable, **in that** preferably the snap and/or detent hooks (41) engage in a groove (42) on the axle (14) and **in that** also preferably on exceeding the threshold force the snap and/or detent hooks (41) spread apart such that the axle (14) is released for recessing the actuating member (4) in the housing (3).

10. Electric switch according to one of claims 1 to 9, **characterised in that** the spring element (9) is made of metal.

11. Electric switch according to one of claims 1 to 9, **characterised in that** the snap and/or detent hooks (41) are made of plastic and are injected in particular in one piece onto the sleeve-shaped shoulder (20), **in that** preferably the snap and/or detent hooks (41) are arranged on the inside of the sleeve-shaped shoulder (20) such that movement is possible perpendicular to the axial direction (7, 7') in relation to their spreadability, **in that** also preferably on the axle (14) a stop (43) is positioned for limiting the movement of the axle (14) in axial direction (7,7'), and **in that** also preferably the sleeve-shaped shoulder (20) is provided with reinforcing ribs (44) located in the housing (3).

## Revendications

1. Commutateur électrique, en particulier pour un véhicule automobile, comme pour une unité de commande de l'éclairage (1) dans un véhicule automobile, comprenant un boîtier (3), un organe d'actionnement (4) sortant du boîtier (3), et dans le boîtier (3) un système de contacts (5) commutable au moyen de l'organe d'actionnement (4), l'organe d'actionnement (4) pouvant être enfoncé sous l'action d'une force dépassant une valeur de seuil, et dans lequel l'organe d'actionnement (4) enfoncé peut être retiré par une force de traction dans le sens (7') contraire à l'enfoncement, de façon à retrouver après son enfoncement et l'extraction qui suit, sa position initiale sortante,
**caractérisé en ce que**
l'organe d'actionnement (4) peut être enfoncé au moins partiellement dans le boîtier (3), et l'organe d'actionnement (4) coopère avec un élément de ressort (9) dans le boîtier (3) ou avec des crochets d'accrochage et/ou d'encliquetage (41) de telle manière que d'une part l'organe d'actionnement (4) est maintenu dans la position sortant du boîtier (3), notamment en pouvant tourner librement, et que d'autre part l'organe d'actionnement (4) est libéré pour son enfoncement lors du dépassement de la force de seuil.

2. Commutateur électrique selon la revendication 1,
**caractérisé en ce que**
l'organe d'actionnement (4) est logé en pouvant tourner dans le boîtier (3) de préférence au moyen d'un arbre (14), d'un axe (14) ou analogue, en particulier à la manière d'un commutateur rotatif, de telle manière que le système de contacts (5) soit commuté par un mouvement de rotation de l'organe d'actionnement (4), et pour son enfoncement dans le boîtier (3), l'organe d'actionnement (4) est de préférence mobile dans la direction axiale (7) par rapport au mouvement de rotation (6), en particulier sensiblement perpendiculairement à la surface (8) du boîtier (3) par laquelle l'organe d'actionnement (4) sort.

3. Commutateur électrique selon la revendication 1 ou 2,
**caractérisé en ce qu'**
un élément de ressort (9) est fixé avec une extrémité dans le boîtier (3) et coopère par son autre extrémité libre avec l'organe d'actionnement (4).

4. Commutateur électrique selon la revendication 1, 2 ou 3,
**caractérisé en ce que**
l'élément de ressort (9) est réalisé à la manière d'un ressort à branches sensiblement en forme de U, de préférence un ressort à branches (9) est fixé dans le boîtier (3) à la base (11) du U, et plus préférablement les deux branches libres, éventuellement coudées (10, 10') du U s'engagent avec une force de serrage élastique dans une rainure (13) de l'organe d'actionnement (4).

5. Commutateur électrique selon l'une des revendications 1 à 4,
**caractérisé en ce que**
l'organe d'actionnement (4) présente un arbre (14), un axe (14) ou analogue disposés dans le boîtier (3), de préférence l'arbre (14), l'axe (14) ou analogue sont en contact avec un rotor (15) actionnant le système de contacts (5), de telle manière que d'une part le rotor (15) puisse tourner au moyen de l'organe d'actionnement (4) et que d'autre part l'arbre (14), l'axe (14) ou analogue puissent coulisser axialement contre le rotor (15), et de préférence la rainure (13) destinée à recevoir les branches (10, 10') du ressort à branches (9) se trouve sur l'arbre (14), l'axe (14) ou analogue.

6. Commutateur électrique selon l'une des revendications 1 à 5,
**caractérisé en ce que**
le rotor (15) est monté en rotation dans un support (17) se trouvant dans le boîtier (3), de préférence le rotor (15) coopère au moyen d'un poussoir à ressort (18) avec une came crantée (19) pour la fixation des positions d'encliquetage, en outre préférablement l'arbre (14), l'axe (14) ou analogue sont montés dans une saillie en forme de douille (20) sur une pièce de maintien (35) dans le boîtier (3), et encore de préférence les branches (10, 10') du ressort à branches (9) pénètrent à travers une ouverture (22) dans la pièce de maintien (35) pour s'engager dans la rainure (13) de l'arbre (14).

7. Commutateur électrique selon l'une des revendications 1 à 6,
**caractérisé en ce que**
des organes d'actionnement (24, 26), en particulier du type boutons-poussoirs, bascules, boutons moletés ou analogues, pour des systèmes de contacts (23) d'autres commutateurs, pour des potentiomètres (25) ou analogues, sont disposés dans et/ou sur le boîtier (3), pour pouvoir commander d'autres fonctions de commutation en plus de la commutation rotative réalisable au moyen de l'organe d'actionnement (4).

8. Commutateur électrique selon l'une des revendications 1 à 7,
**caractérisé en ce qu'**
une plaquette de circuits imprimés (27) est disposée dans le boîtier (3) pour recevoir au moins un système de contacts (5, 23), le potentiomètre (25) ou analogues, de préférence un dispositif électronique se trouve sur la plaquette de circuits imprimés (27) pour traiter les signaux de commutation ainsi que pour produire éventuellement des signaux de bus, en outre préférablement un raccord (28) en liaison électrique avec la plaquette de circuits imprimés (27) est disposé sur le boîtier (3), notamment pour un système de bus, et de plus de préférence des diodes électroluminescentes (29, 29') se trouvent sur la plaquette de circuits imprimés (27) pour un éclairage, notamment à l'aide de guides de lumière (32), de symboles (30), d'informations (31) ou analogues sur les organes d'actionnement (4, 24, 26) et/ou sur le boîtier (3).

9. Commutateur électrique selon l'une des revendications 1 à 8,
**caractérisé en ce que**
les crochets d'accrochage et/ou d'encliquetage (41) se trouvent dans une saillie en forme de douille (20) dans le boîtier (3), de préférence l'axe (14) guidé notamment dans la saillie en forme de douille (20) est maintenu au moyen des crochets d'accrochage et/ou d'encliquetage (41) dans la position dans laquelle l'organe d'actionnement (4) sort du boîtier (3), notamment en pouvant tourner librement, de plus préférablement les crochets d'accrochage et/ou d'encliquetage (41) s'engagent dans une rainure (42) sur l'axe (14), et encore de préférence un dépassement de la force de seuil entraîne une expansion des crochets d'accrochage et/ou d'encliquetage (41) libérant l'axe (14) pour pouvoir enfoncer l'organe d'actionnement (4) dans le boîtier (3).

10. Commutateur électrique selon l'une des revendications 1 à 9,
**caractérisé en ce que**
l'élément de ressort (9) est en métal.

11. Commutateur électrique selon l'une des revendications 1 à 9,
**caractérisé en ce que**
les crochets d'accrochage et/ou d'encliquetage (41) sont formés par injection de plastique notamment d'une seule pièce sur la pièce en forme de douille (20), de préférence les crochets d'accrochage et/ou d'encliquetage (41) sont à l'intérieur de la saille en forme de douille (20) pour pouvoir être mobiles sensiblement transversalement à la direction axiale (7, 7') en vue de leur expansion, de plus préférablement une butée (43) est prévue sur l'axe (14) pour limiter le mouvement de l'axe (14) dans la direction axiale (7, 7'), et encore de préférence la saillie en forme de douille (20) est pourvue de nervures de renforcement (44) à l'intérieur du boîtier (3).
